# EUROPÄISCHE PATENTSCHRIFT

(11) **EP 1 445 215 B1**
(45) Veröffentlichungstag und Bekanntmachung des Hinweises auf die Patenterteilung: **07.06.2006**
(21) Anmeldenummer: 03405055.9
(22) Anmeldetag: 04.02.2003
(51) Int. Cl.: B65G 1/04, B65D 21/08

(54) **Speichervorrichtung und Verfahren zum Speichern von Stueckgut**
Storage device and method for storing articles
Dispositif et procédé de stockage d'articles

(43) Veröffentlichungstag der Anmeldung: 11.08.2004
(73) Patentinhaber: Promatec Automation AG, 4552 Derendingen (CH)
(72) Erfinder: Schär, Fritz, 3375 Inkwil (CH); Hulliger, Urs, 4707 Deitingen (CH)
(74) Vertreter: Seehof, Michel

(56) Entgegenhaltungen:
- WO-A-91/10381
- AT-B- 404 124
- DE-A- 2 140 214
- DE-A- 4 244 713
- GB-A- 2 088 334
- US-A- 4 750 633

## Beschreibung

Die Erfindung bezieht sich auf eine Speichervorrichtung zum Speichern von Stückgut sowie auf ein Verfahren dazu unter Verwendung einer derartigen Speichervorrichtung.

Damit aus einer Vielzahl von verschiedenen Stückgütern rasch ein Stückgut der gewünschten Art aufgefunden werden kann, sind die Stückgüter in geeigneter Weise zu speichern.

Aus der österreichischen Patentschrift AT-B-404 124 ist ein Magazin zur Aufnahme von Stückgütern bekannt, das zwei mit Stegen verbundenen Seitenwände umfasst, welche die Breite des Magazins definieren. Diese Breite kann durch entsprechendes Einstellen der Steglänge auf die Breite eines Stückgutes angepasst werden. Nachteilig dabei ist, dass mit diesem Magazin nur bestimmte Arten von Stückgütern wie Bücher, Tonträger oder Kisten gespeichert werden können. Zur Speicherung von z.B. kleinen Stückgütern wie Schrauben, Muttern, Ringen etc. sind solche Magazine ungeeignet.

Aus der DE-A-2140214 ist eine Speichervorrichtung mit Schubladen bekannt. Diese haben jeweils eine vorgegebene Grösse, sodass sie nicht an das Volumen des zu speichernden Stückguts anpassbar sind und somit der vorhandene Speicherraum nicht optimal ausgenutzt werden kann.

Ausgehend von diesem Stand der Technik ist es Aufgabe der vorliegenden Erfindung, eine Speichervorrichtung der eingangs erwähnten Art anzugeben, mit welcher der vorhandene Speicherraum möglichst optimal ausgenutzt werden kann und welche zur Speicherung von verschiedenen Arten von Stückgütern geeignet ist.

Eine erfindungsgemässe Vorrichtung, welche diese Aufgabe löst, ist im Vorrichtungsanspruch 1 angegeben. Die weiteren Ansprüche geben bevorzugte Ausführungen sowie Verfahren zum Speichern von Stückgut an.

Die erfindungsgemässe Vorrichtung hat den Vorteil, dass der vorhandene Speicherraum möglichst optimal ausgenutzt werden kann, wobei verschiedene Arten von Stückgütern speicherbar sind.

Die Erfindung wird im Folgenden anhand eines Ausführungsbeispiels unter Bezugnahme auf Figuren erläutert.

Es zeigen
- Fig. 1: eine perspektivische Ansicht einer Schublade zum Speichern von Stückgut;
- Fig. 2: eine Seitenansicht der Schublade gemäss Figur 1;
- Fig. 3: eine perspektivische Ansicht eines Aufsetzrahmens für eine Schublade gemäss Figur 1;
- Fig. 4: eine perspektivische Ansicht der Speichervorrichtung;
- Fig. 5: eine perspektivische Teilansicht der Speichervorrichtung gemäss Figur 4;
- Fig. 6: eine perspektivische Ansicht der Ausziehvorrichtung zum Verschieben einer Schublade gemäss Figur 1; und
- Fig. 7: eine Draufsicht der Ausziehvorrichtung gemäss Figur 6.

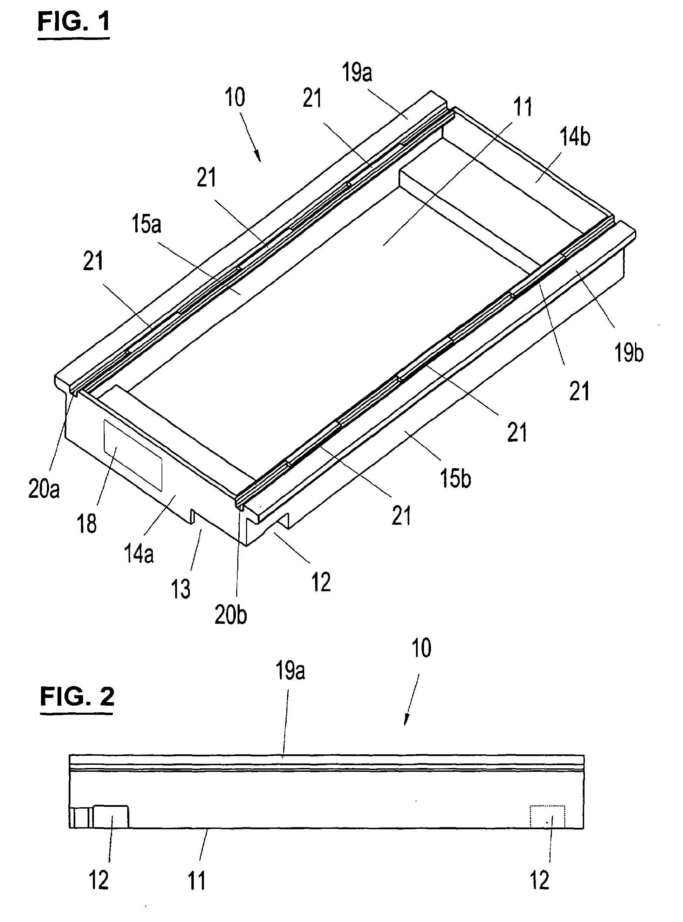

Die in Figur 1 dargestellte Schublade 10 dient als Behälter zum Speichern von Stückgut. Sie weist einen rechteckigen Grundriss auf, wobei das maximale Speichervolumen der Schublade 10 durch die Dimensionen ihres Grundrisses sowie ihrer Höhe bestimmt ist. Z.B. hat die Schublade 10 die Innenmasse 22 cm × 9.6 cm × 3 cm, sodass sich ein Speichervolumen von etwa 600 cm³ ergibt.

Wie auch aus Figur 2 ersichtlich ist, ist der Boden 11 der Schublade 10 im Bereich der Vorderseite 14a abgestuft ausgestaltet, sodass eine Auszugsnut 12 in Querrichtung der Schublade 10 gebildet ist. Analog ist der Boden 11 im Bereich der Hinterseite 14b der Schublade 10 abgestuft und mit einer entsprechenden Auszugsnut 12 versehen (in Figur 2 gestrichelt dargestellt), sodass die Schublade 10 symmetrisch um die Mittelebene ausgestaltet ist. Damit die jeweilige Auszugsnut 12 gut von vorne zugänglich ist, ist zusätzlich eine Aussparung 13 an der Vorder- bzw. Hinterseite 14a bzw. 14b der Schublade 10 vorgesehen. Wie weiter unten genauer erläutert, dient die Auszugsnut 12 zum Verschieben der Schublade.

Wie Figur 1 weiter zeigt, ist zur eindeutigen Kennzeichnung der Schublade 10 z.B. an ihrer Vorderseite 14a eine Etikette 18 angebracht, die mit einem eindeutigen Barcode sowie optional mit weiteren Angaben versehen ist. Es ist auch denkbar die Schublade 10 zur elektronischen Kennzeichnung mit einem Transponder zu versehen.

Zum Halten der Schublade 10 ist an der Oberkante der beiden Seitenwände 15a und 15b je eine Haltewulst 19a bzw. 19b angebracht, welche in eine entsprechende Stützschiene 64 eingefahren werden kann wie dies weiter unten genauer erläutert wird.

Parallel zu der jeweiligen Haltewulst 19a bzw. 19b verläuft eine Einrastnut 20a bzw. 20b, wobei die Oberkante der beiden Seitenwände 15a und 15b mit Halteelementen 21 versehen sind, welche die Einrastnuten 20a bzw. 20b zumindest teilweise nach oben abschliessen.

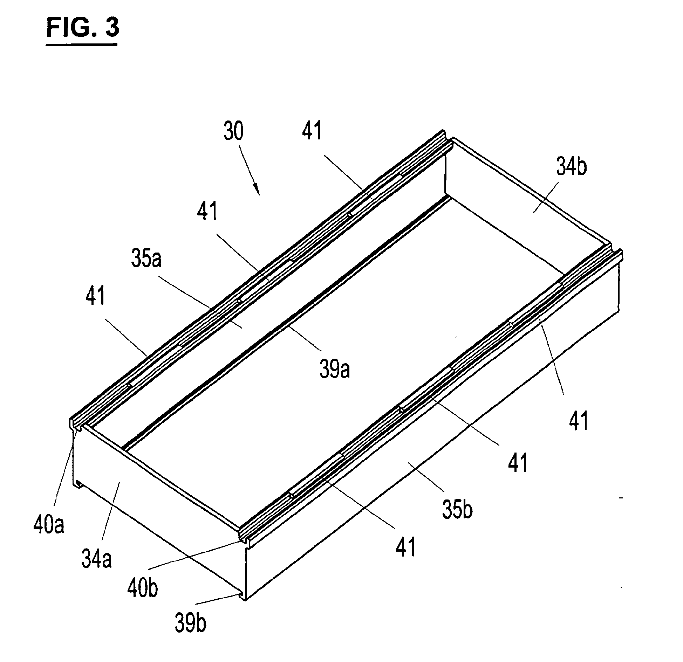

Die Einrastnuten 20a bzw. 20b und die Halteelemente 21 dienen dazu, die Schublade 10 mit einem Aufsetzelement 30 verbinden zu können. Figur 3 zeigt ein solches Aufsetzelement 30 in Form eines Aufsetzrahmens. Die Dimensionen seines Grundrisses sind gleich denen von der Schublade 10, sodass der Aufsetzrahmen 30 und die Schublade 10 bündig zueinander verbindbar sind. Die Höhe des Aufsetzrahmens 30 entspricht beispielsweise in etwa der Höhe der Schublade 10, sodass durch Aufsetzen des Aufsetzrahmens 30 das Speichervolumen des Behälters zum Speichern von Stückgut verdoppelt werden kann.

Die beiden Seitenwände 35a und 35b des Aufsetzrahmens 30 weisen unten jeweils eine Verbindungslippe 39a bzw. 39b auf, welche in Längsrichtung des Aufsetzrahmens 30 verläuft und ein L-förmiges Profil aufweist. Zum Verbinden der Schublade 10 mit dem Aufsetzrahmen 30 werden die Verbindungslippen 39a bzw. 39b seitlich in die entsprechende Einrastnut 20a bzw. 20b der Schublade 10 geschoben, bis die jeweiligen Vorder-und Hinterseiten 14a und 34a bzw. 14b und 34b bündig zueinander sind. Die Halteelemente 21 verhindern dabei ein Auseinanderfallen der Schublade 10 und des Aufsetzrahmens 30.

Wie Figur 3 weiter zeigt, sind jeweils an der oberen Kante der beiden Seitenwände 35a und 35b des Aufsetzrahmens 30 eine Einrastnut 40a bzw. 40b und Halteelemente 41 vorgesehen gleich wie die Einrastnuten 20a bzw. 20b und Halteelemente 21 der Schublade 10. Dadurch ist es möglich, den Aufsetzrahmen 30 mit einem weiteren Aufsetzrahmen 30 derselben Art zu verbinden, indem die Verbindungslippen 39a, 39b des einen Aufsetzrahmens in die entsprechenden Einrastnuten 40a, 40b des anderen Aufsetzrahmens geschoben werden, wodurch das Speichervolumen des Behälters zum Speichern von Stückgut weiter vergrössert werden kann. Durch Verbinden der Schublade 10 mit der entsprechenden Anzahl Aufsetzrahmen 30 kann somit das Speichervolumen des Behälters an das Volumen des zu speichernden Stückgutes angepasst werden.

Die Schublade 10 sowie das Aufsetzelement 30 sind beispielsweise aus Kunststoff hergestellt, der vorzugsweise schlagfest ist.

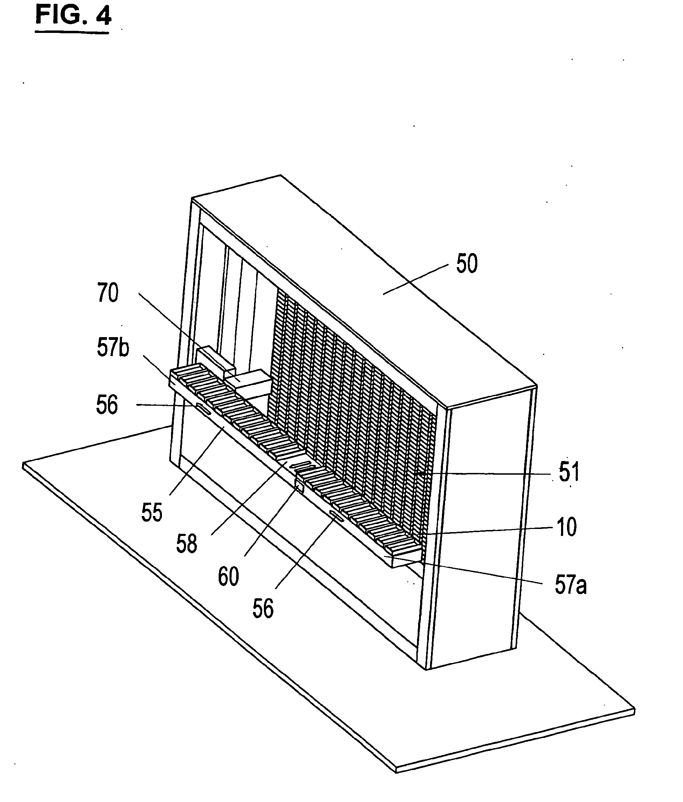

Wie Figur 4 zeigt, umfasst die Speichervorrichtung ein rechteckiges Gehäuse 50, in welchem sich ein Regal 51 mit einer bestimmten Anzahl Speicherplätze 52 befindet. In jedem der Speicherplätze 52 kann jeweils eine Schublade 10 der Art gemäss Figur 1 gelagert werden. Ist eine Schublade 10 mit einer bestimmten Anzahl von Aufsetzelementen 30 verbunden, so ist eine entsprechende Anzahl Speicherplätze 52 oberhalb der Schublade 10 durch diese Aufsetzelemente 30 besetzt.

An der Vorderseite des Gehäuses 50 ist eine Transportvorrichtung 55 in Form eines Bandes angebracht zum Transportieren von Schubladen 10 in die in Figur 4 durch die Pfeile 56 markierte Richtung. Zwischen den beiden Enden 57a und 57b des Transportbandes 55 befindet sich ein von aussen zugänglicher Entnahmeplatz 58, von welchem eine Schublade 10 entnommen werden kann. Zum Einspeisen in die Speichervorrichtung wird eine Schublade 10 auf das Transportband 55 an ihrem Ende 57a gelegt.

Die Speichervorrichtung weist weiter einen Roboter als Verschiebeeinheit 70 auf, welche in horizontaler und vertikaler Richtung gesteuert verfahrbar ist. Der Roboter 70 dient einerseits dazu eine bestimmte Schublade 10 aus dem Regal 51 zu entnehmen und sie beim Entnahmeplatz 58 auf das Transportband 55 zu legen. Andererseits kann mittels des Roboters 70 eine Schublade 10 vom Transportband 55 aufgenommen und zu einem bestimmten Speicherplatz 52 verschoben werden.

Im Transportband 57 ist optional ein Wägeplatz 60 mit mindestens einer Waage vorgesehen, sodass eine Schublade 10 und das darin gespeicherte Stückgut gewogen werden kann. Dadurch ist es möglich, automatisch Inventar zu führen über die in den einzelnen Schubladen 10 gespeicherten Stückgütern. Es ist denkbar noch eine weitere Waage mit einer anderen Empfindlichkeit vorzusehen, sodass das Gewicht von sowohl leichten als auch schweren Stückgütern (z.B. Papierzetteln und Schrauben) zuverlässig bestimmt werden kann.

Eine Schublade 10 und das darin gespeicherte Stückgut wird beim Einspeisen in die Speichervorrichtung mittels der Waage 60 gewogen und der aktuelle Wert ("Istwert") zum Führen eines Inventars in der Rechnereinheit gespeichert. Zusätzlich kann der aktuelle Wert mit dem Wert aus der vorhergehenden Wägung verglichen und die Differenz gespeichert werden, sodass Informationen über die insgesamt entnommenen Stückgütern zur Verfügung stehen. Weiter ist es möglich, einen Sollwert festzulegen, sodass die Rechnereinheit eine entsprechende Meldung liefert, wenn der Istwert unter dem Sollwert liegt. Der Bediener kann so darüber entscheiden, ob neue Stückgüter zu beschaffen sind. Nach der Wägung wird schliesslich die Schublade 10 durch den Roboter 70 zu einem geeigneten Speicherplatz 52 verschoben.

Optional ist die Rückwand des Gehäuses, wo sich das Regal 51 mit den Speicherplätzen 52 befindet, mit einem Scharnier versehen, sodass sie ähnlich wie eine Türe geöffnet werden kann und somit das Gehäuseinnere z.B. für Wartungszwecke von aussen zugänglich ist.

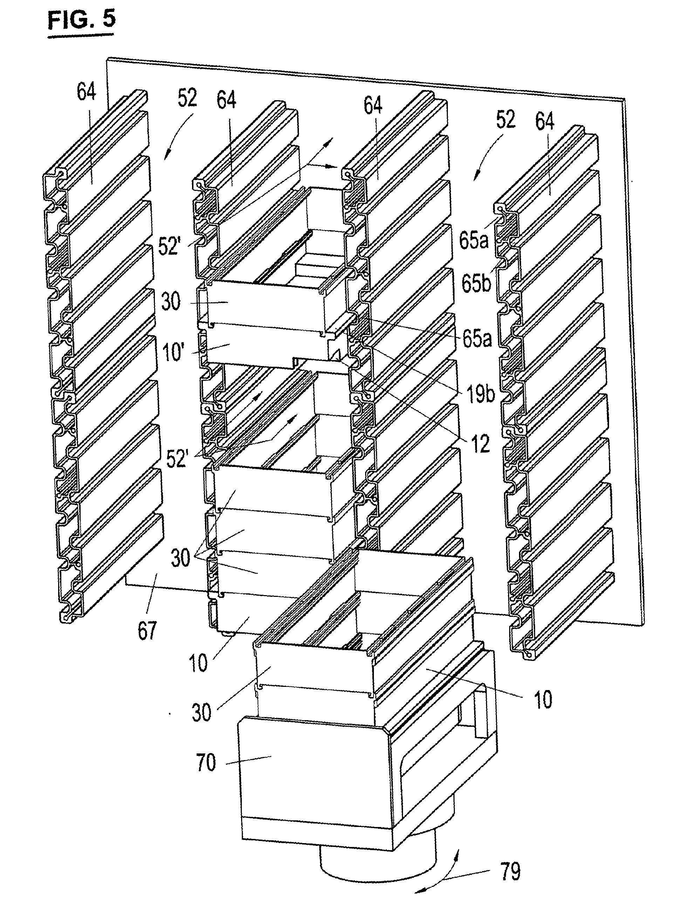

Wie die Detailansicht in Figur 5 zeigt, umfasst das Regal 51 Stützschienen 64, die an der Rückwand 67 des Gehäuses 50 befestigt sind. Der Abstand zwischen zwei benachbarten Stützschienen 64 ist etwas grösser als die Breite der Schublade 10, sodass diese dazwischen hineingeschoben werden kann. Die Tiefe einer Stützschiene 64 ist etwas kürzer als die Länge einer Schublade 10, sodass die Auszugsnut 12 einer in einem Speicherplatz 52 gelagerte Schublade 10 seitlich zugänglich ist.

Beide Seiten einer Stützschiene 64 sind mit Haltenuten 65a bzw. 65b versehen, in welche jeweils die Haltewulst 19a bzw. 19b einer Schublade 10 hineingeschoben werden kann. Der Abstand zwischen zwei benachbarten Haltenuten 65a bzw. 65b ist etwas grösser als die Höhe einer Schublade 10, sodass in zwei vertikal benachbarte Speicherplätze 52 jeweils eine Schublade 10 hineingeschoben werden kann. Die Haltenuten 65a auf der einen Seite einer Stützschiene 64 sind etwas versetzt angeordnet in Bezug auf die Haltenuten 65b auf der anderen Seite derselben Stützschiene 64, sodass die Breite der Stützschiene 64 möglichst gering ist und somit eine möglichst kompakte Bauweise des Regals 51 erzielt werden kann. Zur Herstellung der Stützschienen 64 eignet sich beispielsweise ein entsprechendes Profil aus Leichtmetall wie Aluminium.

Wie bereits oben erläutert, kann jeder Speicherplatz 52 durch eine Schublade 10 oder ein Aufsetzelement 30 besetzt sein. Im Beispiel gemäss Figur 5 befinden sich im Regal 51 eine Schublade 10 mit drei Aufsetzelementen 30 und eine Schublade 10' mit einem Aufsetzelement 30, wobei dazwischen zwei Speicherplätze 52' frei sein.

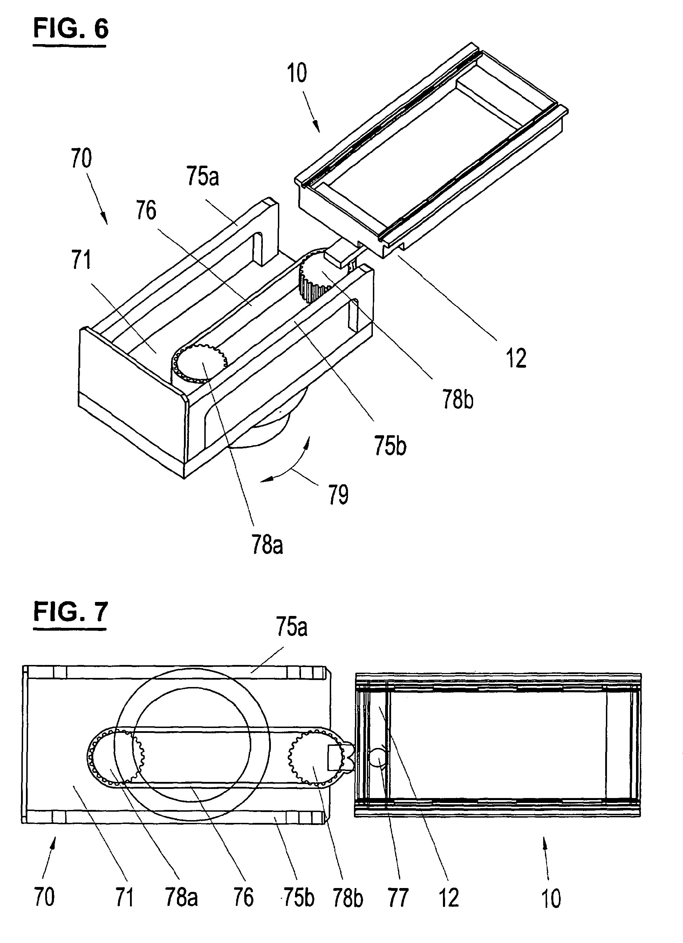

Figur 5 zeigt auch die Verschiebeeinheit 70, auf welcher sich eine Schublade 10 mit einem Aufsetzelement 30 befindet. Wie die Figuren 6 und 7 detaillierter zeigen, weist die Verschiebeeinheit 70 eine Bodenplatte 71 und zwei parallele Seitenbügel 75a und 75b auf, zwischen welche eine Schublade 10 hingeschoben werden kann, so dass die jeweilige Haltewulst 19a bzw. 19b auf der Oberkante eines entsprechenden Seitenbügels 75a bzw. 75b aufliegt. Auf der Bodenplatte 71 befindet sich ein Endlosriemen 76 mit einem Kopplungselement 77 in Form beispielsweise eines Zapfens. Der Riemen 76 ist um zwei voneinander beabstandeten Zahnrädern 78a und 78b gelegt, wobei mindestens eines davon angetrieben werden kann. Zum Herausziehen einer Schublade 10 wird der Riemen 76 im Gegenuhrzeigersinn bewegt, sodass der Zapfen 77 zuerst in die Auszugsnut 12 der Schublade 10 hingeschoben wird, worauf diese mitgenommen und dann nach vorne gezogen wird, bis sie ganz auf den Seitenbügeln 75a, 75b aufliegt. Das Führen des Kopplungselementes 77 auf einer gekrümmten Bahn hat den Vorteil, dass die Schublade 10 mit einem geringen Ruck verschiebbar ist. Insbesondere wird hier das Kopplungselement 77 entlang einer kreisförmigen Bahn geführt wird, sodass die Schublade 10 eine im Wesentlichen sinusförmige Beschleunigung erfährt und diese somit besonders am Anfang der Bewegung nicht ruckartig, sondern sanft verschoben wird.

Wie oben erläutert, ist die Verschiebeeinheit 70 zwischen dem Transportband 55 und dem Regal 51 seitlich und in der Höhe verfahrbar. Wie in Figur 5 durch den Doppelpfeil 79 angedeutet, ist die Verschiebeeinheit 70 zusätzlich um eine vertikale Achse rotierbar, sodass eine auf der Verschiebeeinheit 70 aufgenommene Schublade 10 insbesondere um 180 Grad gedreht werden kann. Somit kann mittels Drehen des Kopplungselementes 77 im Gegenuhrzeigersinn eine Schublade 10 sowohl aus dem Regal 51 entnommen als auch auf das Transportband 55 gelegt bzw. von diesem genommen werden.

Zur Steuerung der Verschiebeeinheit 70 sowie des Transportbandes 55 ist eine Rechnereinheit vorgesehen (nicht dargestellt). Diese dient auch dazu, Informationen über die einzelnen Schubladen 10 wie Speicherplatz, Anzahl verbundener Aufsetzelemente 30, Art und Menge des gespeicherten Stückgutes, etc. zu speichern und zu verwalten. Die Rechnereinheit überwacht auch die freien Speicherplätze 52 und ordnet eine der Speichervorrichtung eingespeiste Schublade 10 einem entsprechenden Speicherplatz 52 zu.

Zum Erfassen der Gesamthöhe einer Schublade 10 ist in der Speichervorrichtung eine Sensoreinheit vorgesehen z.B. in Form einer Reihe von Lichtsensoren. Aus dem gemessenen Wert der Gesamthöhe kann die Rechnereinheit die Anzahl Aufsetzelemente 30 berechnen, welche mit der Schublade 10 verbunden sind, und somit geeignete Speicherplätze 54 im Regal 51 bestimmen.

Die Speicherung von Stückgütern in der Speichervorrichtung geschieht folgendermassen:

Der Benutzer legt die verschiedenen Stückgüter in die Schubladen 10, wobei diese dem Volumen der Stückgüter entsprechend gegebenenfalls mit einem oder mehreren Aufsetzelementen 30 verbunden werden. Daten beispielsweise über Art des Stückgutes, Schubladen-Nummer (korrespondierend zum Barcode), Gewicht eines einzelnen Stückgutes, Anzahl aufgesetzter Aufsetzelemente 30, etc. werden in die Rechnereinheit eingegeben. Somit sind u.a. Informationen darüber gespeichert, welche Stückgüter in welcher Schublade 10 gelagert sind.

Die beladenen Schubladen 10 werden beim Einspeiseplatz 57a auf das Transportband 55 gelegt und dann von der Verschiebeeinheit 70 einzeln aufgenommen. Der Barcode der Schublade 10 wird gelesen und die Information der Rechnereinheit übergeben. Ist eine Waage vorgesehen, so wird die Schublade 10 zum Wägeplatz 60 verschoben u.a. zur Bestimmung der Menge an Stückgütern, die sich in einer Schublade 10 befindet. Daraufhin wird die Gesamthöhe der Schublade 10 erfasst und durch die Rechnereinheit ein freier Speicherplatz 52 ermittelt, zu welchem die Schublade 10 dann mittels der Verschiebeeinheit 70 transportiert wird.

Benötigt der Benutzer eine bestimmte Menge eines Stückgutes, gibt er die entsprechende Information in die Rechnereinheit ein. Die Verschiebeeinheit 70 wird - gesteuert durch die Rechnereinheit - zum entsprechenden Speicherplatz 52 verfahren, die Schublade 10 entnommen und dem Transportband 55 übergeben. Nach der Entnahme des Stückgutes speist der Benutzer die Schublade 10 beim Einspeiseplatz 57a wieder ein.

Da die Schubladen 10 eindeutig gekennzeichnet sind und die Speicherplätze 52 durch die Rechnereinheit verwaltet und überwacht werden, brauchen die Speicherplätze 52 nicht fest einer jeweiligen Schublade 10 zugeordnet werden. Zur Optimierung der Raumausnutzung werden durch die Rechnereinheit gegebenenfalls Umschichtungen der Schubladen 10 vorgenommen. Angenommen im Beispiel gemäss Figur 5 sind alle Speicherplätze 52 belegt bis auf die beiden Speicherplätze 52' ober- und unterhalb der Schublade 10', welche in Figur 5 mit einem Aufsetzelement 30 verbunden ist. Soll nun eine Schublade 10 mit drei Aufsetzelementen 30 im Regal aufgenommen werden, so wird diese Schublade 10' um zwei Speicherplätze 52' nach unten verschoben, wodurch nun vier aufeinanderfolgende Speicherplätze frei werden. Ist es nicht mehr möglich, die gespeicherten Schubladen 10 so umzuschichten, dass eine weitere Schublade 10, welche mit einer bestimmten Anzahl Aufsetzelemente 30 verbunden ist, eingespeist und gespeichert werden kann, liefert die Rechnereinheit eine entsprechende Fehlermeldung.

Der modulartige Aufbau der Schubladen 10 und Aufsetzelementen 30 hat den Vorteil, dass das Speichervolumen eines Behälters optimaler an das Volumen eines Stückgutes angepasst werden kann. Es reicht dazu aus, dass die Schubladen 10 und Aufsetzelementen 30 lediglich in einer bestimmten Abmessung hergestellt werden.

Mit der oben beschriebenen Speichervorrichtung sowie Verfahren kann das gewünschte Stückgut rasch aufgefunden werden. Es können auch die verschiedensten Arten von Stückgütern automatisch gespeichert und verwaltet werden, beispielsweise Kleinteile in einer Werkstatt (Schrauben, Muttern, Nägel, Ringe, etc.), Akten, Bücher, Medikamente (Schachteln, Pillen, Blister, etc.), usw.

## Patentansprüche

1. Speichervorrichtung zum Speichern von Stückgut umfassend:
mindestens eine Schublade (10) als Behälter zur Aufnahme von Stückgut;
mindestens ein Aufsetzelement (30), welches mit der Schublade verbindbar ist zum Vergrössern des Speichervolumens der Schublade und welches Verbindungsmittel (40a, 40b, 41) umfasst, sodass es mit einem weiteren Aufsetzelement (30) derselben Art verbindbar ist zur weiteren Vergrösserung des Speichervolumens; und
mindestens ein Regal (51) mit Speicherplätzen (52), welche jeweils durch die Schublade oder das Aufsetzelement besetzbar sind.

2. Speichervorrichtung nach Anspruch 1, **dadurch gekennzeichnet, dass** das Aufsetzelement als Rahmen (30) ausgebildet ist.

3. Speichervorrichtung nach einem der Ansprüche 1 bis 2, **dadurch gekennzeichnet, dass** sie eine Verschiebeeinheit (70) umfasst zur Aufnahme des Behälters (10), wobei sie zum Verschieben des Behälters entlang mindestens zwei Richtungen verfahrbar ist und vorzugsweise zum Drehen des Behälters um eine Achse rotierbar (79) ist.

4. Speichervorrichtung nach Anspruch 3, **dadurch gekennzeichnet, dass** die Verschiebeeinheit (70) ein Kopplungselement (77) umfasst, welches an den Behälter (10) ankoppelbar ist und welches auf einer gekrümmten Bahn führbar ist, sodass der an das Kopplungselement angekoppelte Behälter lediglich mit einem geringen Ruck verschiebbar ist.

5. Speichervorrichtung nach einem der Ansprüche 1 bis 4, **dadurch gekennzeichnet, dass** sie eine Transportvorrichtung (55) umfasst zum Einspeisen des Behälters (10).

6. Speichervorrichtung nach einem der Ansprüche 1 bis 5, **dadurch gekennzeichnet, dass** sie mindestens eine Waage (60) umfasst zum Wägen des Behälters (10) zusammen mit dem darin gespeicherten Stückgut.

7. Speichervorrichtung nach einem der Ansprüche 1 bis 6, **dadurch gekennzeichnet, dass** sie eine Sensoreinheit umfasst zum Erfassen der Anzahl Aufsetzelemente (30), welche mit dem Behälter (10) verbunden sind.

8. Verfahren zum Speichern von Stückgut unter verwendung der Speichervorrichtung nach einem der Ansprüche 1 bis 7, wobei das Speichervolumen des Behälters an das Volumen des Stückguts angepasst wird durch Verbinden des Behälters mit mindestens einem Aufsetzelement (30).

9. Verfahren nach Anspruch 8, **dadurch gekennzeichnet, dass** zum Speichern von mehreren Arten Stückgütern eine Anzahl der Behälter (10) zur Unterscheidung voneinander je mit einem eindeutigen Kennzeichen (18) versehen und zusammen mit den jeweils verbundenen Aufsetzelementen (30) im Regal (51) gespeichert wird.

10. Verfahren nach einem der Ansprüche 8 bis 9, **dadurch gekennzeichnet, dass** die im Regal (51) gespeicherten Behälter (10) gesteuert durch einen Rechner umgeschichtet werden zur Optimierung der Raumausnutzung des Speichers.

11. Verfahren nach einem der Ansprüche 8 bis 10, **dadurch gekennzeichnet, dass** die Behälter (10) mit dem darin gespeicherten Stückgut gewogen werden zum automatischen Führen eines Inventars.

12. Verfahren nach einem der Ansprüche 8 bis 11, **dadurch gekennzeichnet, dass** die Anzahl Aufsetzelemente (30), welche mit dem Behälter (10) verbunden sind, bestimmt wird.

## Claims

1. Storage device for storing articles, comprising:
at least one drawer (10) as a container for receiving articles;
at least one stacking element (30) that is connectable to the drawer for increasing the storage volume of the drawer and includes connecting means (40a, 40b, 41) such that it is connectable to another stacking element (30) of the same kind for further increasing the storage volume; and
at least one rack (51) having storage locations (52) that may each be occupied by the drawer or by the stacking element.

2. Storage device according to claim 1, **characterised in that** the stacking element is in the form of a frame (30).

3. Storage device according to one of claims 1 to 2, **characterised in that** it comprises a displacing unit (70) for receiving the container (10), the displacing unit being displaceable along at least two directions for displacing the container and preferably rotatable (79) about an axis for rotating the container.

4. Storage device according to claim 3, **characterised in that** the displacing unit (70) comprises a coupling element (77) that can be coupled to the container (10) and guided on a curved track such that the container coupled to the coupling element is displaceable with a minor jolt only.

5. Storage device according to one of claims 1 to 4, **characterised in that** it includes a transport device (55) for feeding the container (10).

6. Storage device according to one of claims 1 to 5, **characterised in that** it includes at least one weighing device (60) for weighing the container (10) with the articles stored therein.

7. Storage device according to one of claims 1 to 6, **characterised in that** it includes a sensor unit for detecting the number of stacking elements (30) that are connected to the container (10).

8. Method for the storage of articles using the storage device according to one of claims 1 to 7, where the storage volume of the container is adapted to the volume of the articles by connecting the container to at least one stacking element (30).

9. Method according to claim 8, **characterised in that** for the storage of articles of several kinds, a number of the containers (10) are provided for their distinction with respective unequivocal distinguishing marks (18) and stored in the rack (51) together with the respective stacking elements (30) that are connected thereto.

10. Method according to one of claims 8 to 9, **characterised in that** the containers (10) stored in the rack (51) are shifted under the control of a computer in order to optimise the space utilisation of the storage.

11. Method according to one of claims 8 to 10, **characterised in that** the containers (10) with the articles stored therein are weighed for automatically keeping an inventory.

12. Method according to one of claims 8 to 11, **characterised in that** the number of stacking elements (30) that are connected to the container (10) is being determined.

## Revendications

1. Dispositif de stockage d'articles, comprenant:
au moins un tiroir (10) comme récipient pour contenir des articles;
au moins un élément superposable (30) capable d'être relié au tiroir pour augmenter le volume de stockage du tiroir et muni de moyens de liaison (40a, 40b, 41) permettant de le relier à un élément superposable (30) supplémentaire du même genre pour augmenter davantage le volume de stockage; et
au moins un rayonnage (51) avec des emplacements de stockage (52) pouvant être occupés chacun par le tiroir ou l'élément superposable.

2. Dispositif de stockage selon la revendication 1, **caractérisé en ce que** l'élément superposable présente la forme d'un cadre (30).

3. Dispositif de stockage selon l'une des revendications 1 à 2, **caractérisé en ce qu'**il comprend une unité de déplacement (70) destinée à recevoir le récipient (10), ladite unité étant déplaçable le long d'au moins deux directions pour déplacer le récipient et préférablement orientable (79) autour d'un axe pour tourner le récipient.

4. Dispositif de stockage selon la revendication 3, **caractérisé en ce que** l'unité de déplacement (70) comprend un élément d'accouplement (77) pouvant être accouplé au récipient (10) et guidé sur une voie incurvée, de sorte que le récipient accouplé à l'élément d'accouplement est déplaçable avec une faible secousse seulement.

5. Dispositif de stockage selon l'une des revendications 1 à 4, **caractérisé en ce qu'**il comprend un dispositif de transport (55) pour alimenter le récipient (10).

6. Dispositif de stockage selon l'une des revendications 1 à 5, **caractérisé en ce qu'**il comprend au moins une balance (60) pour peser le récipient (10) y compris les articles stockés dans celui-ci.

7. Dispositif de stockage selon l'une des revendications 1 à 6, **caractérisé en ce qu'**il comprend une unité de détection pour détecter le nombre d'éléments superposables (30) reliés au récipient (10).

8. Procédé de stockage d'articles utilisant le dispositif de stockage selon l'une des revendications 1 à 7, où le volume de stockage du récipient est adapté au volume des articles en reliant le récipient à au moins un élément superposable (30).

9. Procédé selon la revendication 8, **caractérisé en ce que** pour le stockage d'articles de plusieurs types, un nombre de récipients (10) sont chacun pourvus d'une marque distinctive (18) univoque pour les distinguer et stockés dans le rayonnage (51) avec les éléments superposables (30) respectifs y reliés.

10. Procédé selon l'une des revendications 8 à 9, **caractérisé en ce que** les récipients (10) stockés dans le rayonnage (51) sont repositionnés sous la commande d'un ordinateur pour optimiser l'utilisation de l'espace de stockage.

11. Procédé selon l'une des revendications 8 à 10, **caractérisé en ce que** les récipients (10) y compris les articles stockés dans ceux-ci sont pesés pour la tenue automatique d'un inventaire.

12. Procédé selon l'une des revendications 8 à 11, **caractérisé en ce que** le nombre d'éléments superposables (30) reliés au récipient (10) est déterminé.
